# FASCICULE DE BREVET EUROPEEN

(11) **EP 0 681 992 B1**
(45) Date de publication et mention de la délivrance du brevet: **28.07.1999**
(21) Numéro de dépôt: 95400832.2
(22) Date de dépôt: 12.04.1995
(51) Int. Cl.: C01G 23/00, A61L 9/00

(54) **Dispersion colloidale à base d'oxyde de cérium et d'oxyde de titane, son procédé de préparation, et son application au revêtement de substrats**
Kolloidale Dispersion auf der Basis von Ceroxid und Titanoxid, Verfahren zu seiner Herstellung und seine Verwendung zur Beschichtung von Substraten
Colloidal dispersion of cerium oxide and titanium oxide, process for its preparation and its use for coating substrates

(30) Priorité: 09.05.1994 FR 9405686
(43) Date de publication de la demande: 15.11.1995
(73) Titulaire: RHODIA CHIMIE, 92408 Courbevoie Cédex (FR)
(72) Inventeur: Chopin, Thierry, F-95320 Saint Leu la Foret (FR); Huguenin, Denis, F-92600 Asnieres (FR); Mathurin, Alain, F-14150 Ouistreham (FR)
(74) Mandataire: Dubruc, Philippe

(56) Documents cités:
- EP-A- 0 207 857
- PATENT ABSTRACTS OF JAPAN vol. 18 no. 276 (C-1204) ,26 Mai 1994 & JP-A-06 048777 (ASAHI GLASS CO) 22 Février 1994,
- DATABASE WPI Derwent Publications Ltd., London, GB; AN 88-319394 & JP-A-63 236 541 (NISSAN MOTOR)
- PATENT ABSTRACTS OF JAPAN vol. 14 no. 211 (C-0715) ,2 Mai 1990 & JP-A-02 048418 (CATALYSTS & CHEM. IND.)

## Description

La présente invention concerne une dispersion colloïdale à base d'oxyde de cérium et d'oxyde de titane, son procédé de préparation son application au revêtement de substrats notamment comme agent anti-UV, anti-reflet et anti-salissure.

Le problème du revêtement de substrats tels que des verres et des métaux se pose fréquemment. On cherche en effet à protéger ces substrats et à leur conférer des propriétés telles que notamment des propriétés anti-UV, anti-reflet et anti-salissure.

Les salissures sont par exemple des graisses ou des résidus organiques, telles que celles déposées sur un pare-brise de voiture par les gaz d'échappement, les suies, la pollution ou issues des plastifiants des habitacles de voiture.

On cherche par conséquent un revêtement susceptible d'assurer une dégradation photocatalytique de ces salissures.

On peut aussi chercher à apporter aux substrats la propriété de filtre UV tout en leur conférant de bonnes propriétés de transmission de la lumière.

Il est connu de revêtir les substrats pour leur conférer de telles propriétés en utilisant des dispersions colloïdales qui sont déposées sur les substrats à traiter.

Le document JP-A-6-48777 décrit des compositions de revêtement qui se composent d'une dispersion de particules colloïdales à base de CeO₂ et de composés organométalliques, notamment à base de titane. Cette dispersion est déposée sur un substrat, puis ce substrat est chauffé de manière à former un film à base de particules de CeO₂ et de dioxyde de titane.

Le document JP-A-2-48418 décrit le traitement de particules de TiO₂ ou de CeO₂ par de l'oxyde de zirconium.

Toutefois, la mise au point de telles dispersions pose certains problèmes. Il est nécessaire d'une part de trouver des dispersions incorporant plusieurs produits susceptibles de conférer simultanément au revêtement le maximum de propriétés. D'autre part, pour être utilisables industriellement, les dispersions doivent en outre présenter une stabilité suffisante, cette stabilité pouvant être difficile à obtenir comptetenu de la complexité de la composition de la dispersion.

L'objet de l'invention est de fournir une dispersion colloïdale répondant à ces exigences.

Dans ce but, la dispersion colloïdale de l'invention est caractérisée en ce qu'elle comprend des colloïdes composés d'un coeur en oxyde de cérium au moins en partie recouvert d'une couche d'oxyde de titane.

Par ailleurs, l'invention concerne un procédé de préparation d'une telle dispersion collloïdale caractérisé, selon un premier mode, en ce qu'il comprend une étape dans laquelle on met en présence un sol d'oxyde de cérium et un sel de titane puis une étape suivante dans laquelle on élève la température du milieu obtenu à l'étape précédente, éventuellement en présence d'urée, ce par quoi on obtient la précipitation de l'oxyde de titane sur les colloïdes du sol de cérium.

Selon un deuxième mode, le procédé de préparation d'une dispersion colloïdale selon l'invention est caractérisé en ce qu'il comprend une étape dans laquelle on met en présence un sol d'oxyde de cérium et un sel de titane puis une étape suivante dans laquelle on ajoute une base au milieu obtenu à l'étape précédente ce par quoi on obtient la précipitation de l'oxyde de titane sur les colloïdes d'oxyde de cérium.

Selon un troisième mode, le procédé de préparation d'une dispersion colloïdale selon l'invention est caractérisé en ce qu'il comprend les étapes suivantes :
- on précipite un sol d'oxyde de cérium par une base,
- on mélange le précipité obtenu avec un sel de titane ce par quoi on obtient un sol d'oxyde de cérium,
- on élève la température du sol formé, ce par quoi on obtient la précipitation de l'oxyde de titane sur les colloïdes d'oxyde de cérium.

Enfin, selon un quatrième mode, le procédé de préparation d'une dispersion colloïdale selon l'invention est caractérisé en ce qu'il comprend les étapes suivantes :
- on précipite un sol d'oxyde de cérium par une base,
- on mélange le précipité obtenu avec un sel de titane ce par quoi on obtient un sol d'oxyde de cérium,
- on ajoute une base au sol formé, ce par quoi on obtient la précipitation de l'oxyde de titane sur les colloïdes d'oxyde de cérium.

L'invention concerne aussi un procédé pour le revêtement d'un substrat caractérisé en ce qu'on dépose sur ledit substrat une dispersion colloïdale du type décrit ci-dessus.

Enfin l'invention concerne un substrat revêtu obtenu par le procédé ci-dessus.

D'autres caractéristiques, détails et avantages apparaîtront plus clairement à la lecture de la description et des exemples qui vont suivre.

L'invention concerne tout d'abord une dispersion colloïdale dont les colloïdes sont composés d'un coeur en oxyde de cérium au moins en partie recouvert d'une couche d'oxyde de titane.

Par dispersion colloïdale, on entend ici et pour toute la description tout système constitué de fines particules de dimensions colloïdales à base d'oxyde et/ou d'oxyde hydraté (hydroxyde) de cérium, en suspension dans une phase liquide notamment aqueuse. On notera que le cérium peut se trouver soit totalement sous forme de colloïdes, soit simultanément sous forme d'ions et de colloïdes, sans toutefois que la proportion représentée par la forme ionique n'excède 10% environ du total du cérium dans la dispersion colloïdale. Selon l'invention, on met de préférence en oeuvre des dispersions colloïdales dans lesquels le cérium est totalement sous forme colloïdale.

Plus précisément, la dispersion colloïdale selon l'invention est une dispersion de colloïdes d'oxyde de cérium IV dont la surface est recouverte au moins en partie d'un précipité d'oxyde de titane. Cet oxyde de titane peut recouvrir en partie seulement ou en totalité chaque colloïde d'oxyde de cérium.

L'épaisseur de la couche de titane est généralement de l'ordre de 1 à 7 nm.

L'oxyde de titane précipité à la surface des colloïdes se présente habituellement sous forme anatase faiblement cristallisé ou amorphe.

De préférence les dispersions colloïdales de l'invention sont constituées de colloïdes dont la taille est comprise entre 5 et 100 nm et de préférence entre 5 et 30 nm. La taille correspond au diamètre moyen des colloïdes qui est entendu comme le diamètre hydrodynamique moyen de ces derniers, et tel que déterminé par diffusion quasi-élastique de la lumière selon la méthode décrite par Michael L. Mc CONNELL dans la revue Analytical Chemestry 53, n°8, 1007 A, (1981).

Les dispersions colloïdales selon l'invention présentent en général un rapport pondéral de l'oxyde de cérium sur l'oxyde de titane dans les colloïdes compris entre 30/70 et 70/30 et de préférence proche de 50/50.

Selon une autre caractéristique, la proportion de solide en suspension dans la dispersion est de préférence comprise entre 5 et 50% en poids, et plus particulièrement entre 5 et 20%.

Selon une première variante, la phase liquide composant la dispersion colloïdale sera une phase aqueuse.
La phase aqueuse peut comprendre des nitrates, des acétates, des propionates, des chlorures ou des ions ammoniums.

Selon une seconde variante, la phase liquide composant la dispersion colloïdale sera une phase organique. Une telle dispersion colloïdale en phase organique présente l'avantage de pouvoir renforcer les revêtements des substrats revêtus par des procédés sol-gel.

Selon cette dernière variante, la phase organique peut comprendre un acide organique et un milieu liquide organique ou solvant.

Le milieu liquide organique pourra être un hydrocarbure aliphatique ou cycloaliphatique inerte ou leur mélange tel que par exemple des essences minérales ou de pétrole, des éthers minéraux ou de pétrole pouvant également contenir des composantes aromatiques et en particulier l'hexane, l'heptane, l'octane, le nonane, le décane, le cyclohexane, le cyclopentane, le cycloheptane et les naphtènes liquides. Les solvants aromatiques tels que le benzène, le toluène, I'éthylbenzène et les xylènes conviennent également ainsi que les coupes pétrolières du type Solvesso (marque déposée par la société EXXON) notamment le Solvesso 100 qui contient essentiellement un mélange de méthyléthyl et triméthylbenzène et le Solvesso 150 qui renferme un mélange d'alkylbenzènes en particulier de diméthyléthylbenzène et de tetraméthylbenzène. On peut aussi avoir des phases organiques liquides à base d'hydrocarbures chlorés tels que le chloro- ou dichlorobenzène et le chlorotoluène aussi bien que des éthers aliphatiques et cycloaliphatiques tels que l'éther de diisopropyle, I'éther de dibutyle et les cétones aliphatiques et cycloaliphatiques telles que la méthylisobuthylcétone, la diisobuthylcétone, l'oxyde de mésityle.

L'acide organique peut être choisi parmi les acides carboxyliques aliphatiques, les acides sulfoniques aliphatiques, les acides phosphoniques aliphatiques, les acides alcoylarylsulfoniques et les acides alcoylarylphosphoniques possédant environ 10 à 40 atomes de carbone, qu'ils soient naturels ou synthétiques. On peut les utiliser seuls ou en mélange entre eux. A titre d'exemple, on peut citer les acides gras de tallöl, d'huile de coco, de soja, de suif, d'huile de lin, l'acide oléique, l'acide linoléique, l'acide stéarique, l'acide isostéarique, l'acide perlagonique, l'acide caprique, l'acide laurique, l'acide myristique, l'acide dodécylbenzènesulfonique, l'acide éthyl-2 hexoïque, l'acide naphténique, l'acide hexoïque, l'acide toluène-sulfonique, l'acide toluène-phosphonique, l'acide laurylphosphonique, l'acide palmityl-sulfonique, l'acide palmityl-phosphonique.

De manière avantageuse, la dispersion colloïdale pourra comprendre en outre au moins un métal utilisé à titre de dopant ayant pour but de renforcer la fonction photocatalytique de l'oxyde de titane. Ce métal pourra préférentiellement être choisi dans le groupe constitué par: le palladium, le tungstène, le platine, le rhodium.

Ces éléments seront présents dans la dispersion colloïdale au sein du colloïde composé du coeur d'oxyde de cérium revêtu d'oxyde de titane ou adsorbés à la surface de l'oxyde de titane et/ou de l'oxyde de cérium.

De manière avantageuse, la concentration en métaux est comprise entre 0,001 et 0,1% en poids par rapport à la masse de colloïde.

Selon un mode de réalisation, la dispersion colloïdale présente un pH compris entre 0,5 et 4, et plus particulièrement entre 0,5 et 2,5.

Selon un autre mode de réalisation, la dispersion colloïdale présente un pH compris entre 7 et 9.

Divers modes de préparation des dispersions colloïdales de l'invention sont possibles.

Selon un premier mode, le procédé de préparation comprend une étape dans laquelle on met en présence un sol d'oxyde de cérium et un sel de titane puis une étape suivante dans laquelle on élève la température du milieu obtenu à l'étape précédente, éventuellement en présence d'urée, ce par quoi on obtient la précipitation de l'oxyde de titane sur les colloïdes du sol de cérium.

Les sols d'oxyde de cérium, susceptibles d'être mis en oeuvre selon l'invention, sont préparés par des procédés bien connus de l'homme de l'art et qui ont déjà été décrits dans la littérature. Ils peuvent être préparés en particulier selon les méthodes décrites dans les demandes de brevets FR-A-2 583 735, FR-A-2 583 736, FR-A-2 583 737, FR-A-2 596 380, FR-A-2 596 382, FR-A-2 621 576 et FR-A-2 655 972 qui sont toutes au nom de la Demanderesse, et dont les enseignements sont ici totalement inclus à titre de référence. La phase liquide de ces sols peut comprendre des ions acétates ou nitrates.

Le système formé par les fines particules de dimensions colloïdales d'oxyde de cérium en suspension dans la phase liquide peut en outre éventuellement contenir des quantités résiduelles d'ions liés ou adsorbés tels que des nitrates, des acétates, des propionates ou des ammoniums selon les procédés dont sont issus ces sols.

Ces sols sont d'une manière générale des sols acides.

La taille des particules d'oxyde de cérium est de préférence inférieure à 100 nm et de manière plus préférentielle inférieure à 20 nm.

Quant au sel de titane, ce peut avantageusement être un nitrate, un chlorure ou un sulfate. Le nitrate de titane est par exemple issu de la précipitation d'un chlorure de titane par une base telle que l'ammoniaque suivie d'un lavage pour éliminer les ions chlorures et d'une attaque du précipité à l'acide nitrique.

Le sulfate de titane peut provenir de la purification des liqueurs noires issues d'une attaque à l'acide sulfurique de l'ilménite.

Le chlorure de titane peut être obtenu par attaque au chlore de minerais de titane. Dans l'utilisation du chlorure de titane et du sulfate de titane, une préneutralisation de ce sel peut être réalisée afin d'élever son pH.

Dans une première étape, le sol d'oxyde de cérium et le sel de titane sont mis en présence. On introduit généralement le sel de titane dans le sol de cérium. On laisse reposer le mélange quelques minutes pour avoir une homogénéité des espèces solubles de titane dans le sol de cérium. Ensuite, on élève la température pour obtenir la précipitation de l'oxyde de titane à la surface des particules colloïdales d'oxyde de cérium. Cette température pourra être comprise entre 60 et 100°C. A titre d'exemple, cette température sera d'environ 60°C pour l'utilisation d'un nitrate de titane, d'environ 80°C pour un chlorure de titane et d'environ 100°C pour un sulfate de titane.

On obtient alors une dispersion d'oxyde de cérium dont les particules sont recouvertes au moins en partie d'oxyde de titane.

Selon une variante de ce premier mode, il est possible, lors de l'étape d'élévation de la température, de réaliser cette étape en présence d'urée.

Selon un deuxième mode, le procédé de préparation des dispersions colloïdales selon l'invention est caractérisé en ce qu'il comprend une étape dans laquelle on met en présence un sol d'oxyde de cérium et un sel de titane puis une étape suivante dans laquelle on ajoute une base au milieu obtenu à l'étape précédente ce par quoi on obtient la précipitation de l'oxyde de titane sur les colloïdes d'oxyde de cérium.

Les sols de cérium de départ et les sels de titane utilisés possèdent les mêmes caractéristiques que ceux définis au cours de la description du premier mode de préparation.

L'étape de mise en contact du sol de cerium et du sel de titane est identique à la première étape du premier mode de réalisation. Dans la deuxième étape, on ajoute une base pour obtenir la précipitation de l'oxyde de titane à la surface des particules colloïdales d'oxyde de cerium. On obtient alors une dispersion d'oxyde de cérium dont les particules sont recouvertes au moins en partie d'oxyde de titane.

La base utilisée pourra avantageusement être choisie parmi l'ammoniaque ou les hydroxydes d'alcalins et d'alcalino-terreux.

Selon un troisième mode, le procédé de préparation des dispersions colloïdales selon l'invention comprend les étapes suivantes :
- on précipite un sol d'oxyde de cérium par une base,
- on mélange le précipité obtenu avec un sel de titane ce par quoi on obtient un sol d'oxyde de cérium,
- on élève la température du sol formé, ce par quoi on obtient la précipitation de l'oxyde de titane sur les colloïdes d'oxyde de cérium.

Le sol de cérium de départ utilisé possède les mêmes caractéristiques que le sol de cérium défini au cours de la description des précédents modes de préparation. Il est précipité au cours de la première étape par mise en contact avec une base. Cette base peut être par exemple de l'ammoniaque, des hydroxydes d'alcalins ou d'alcalino-terreux. Cette précipitation entraîne alors la formation d'un gâteau d'oxyde ou d'hydroxyde de cérium, lequel est filtré.

Le gâteau est ensuite redispersé dans une solution d'un sel de titane tels que ceux définis pour les précédents modes de préparation et l'oxyde de cérium peptise sous forme d'une dispersion colloïdale.

Enfin on élève la température comme dans le premier mode de préparation et selon les mêmes conditions ce par quoi l'oxyde de titane précipite à la surface des colloïdes d'oxyde de cérium.

Selon un quatrième mode, le procédé de préparation d'une dispersion colloïdale selon l'invention est caractérisé en ce qu'il comprend les étapes suivantes :
- on précipite un sol d'oxyde de cérium par une base,
- on mélange le précipité obtenu avec un sel de titane ce par quoi on obtient un sol d'oxyde de cérium,
- on ajoute une base au sol formé, ce par quoi on obtient la précipitation de l'oxyde de titane sur les colloïdes d'oxyde de cérium.

Les deux premières étapes sont mises en oeuvre de la même manière que dans le troisième mode de réalisation.

Pour ce qui est de la précipitation de l'oxyde de titane à la surface des colloïdes de cérium, elle par contre réalisée par l'ajout d'une base.

Cette base pourra être choisie parmi l'ammoniaque ou les hydroxydes d'alcalins et d'alcalino-terreux.

Selon une variante des modes de réalisation précédents, on prépare des dispersions colloïdales d'oxyde de cérium et d'oxyde de titane comprenant en outre un métal dopant tel que défini plus haut.

Ce métal peut être introduit dans différentes étapes des modes de réalisation définis précédemment.

Ainsi le métal peut être ajouté au sol d'oxyde de cérium à l'étape de départ, dans les quatre modes de réalisation précédents.

Il peut aussi être ajouté lors de l'étape de mise en présence du sol d'oxyde de cérium et du sel de titane, selon les deux premiers modes.

Il peut encore être ajouté au précipité obtenu aprés précipitation du sol de cérium, selon les troisième et quatrième modes.

Toujours selon ces deux derniers modes, il peut être ajouté au mélange dudit précipité et du sel de titane.

Enfin, il peut être ajouté à la dispersion colloïdale obtenue après la précipitation de l'oxyde de titane sur l'oxyde de cérium, selon les quatre modes.

Le ou les métaux dopants pourront être introduits sous forme de sels, plus particulièrement sous forme de nitrates ou de chlorures.

Les dispersions de l'invention peuvent présenter une large gamme de pH acide ou basique. Cette gamme peut être obtenue de la manière suivante. On met en oeuvre les procédés décrits précédemment et on ajoute une étape supplémentaire dans laquelle on fait floculer par ajout d'une base la dispersion colloïdale obtenue après la précipitation de l'oxyde de titane sur l'oxyde de cérium et éventuellement l'ajout de métaux, on lave le floculat et on le disperse sous agitation dans une phase aqueuse de pH désiré.

Pour obtenir une dispersion colloïdale en phase organique à partir d'une dispersion colloïdale en phase aqueuse selon l'invention, on utilise tout mode connu de préparation d'une dispersion colloïdale en phase organique à partir d'une dispersion colloïdale en phase aqueuse.

On pourra notamment mettre en oeuvre un procédé tel que celui décrit dans la demande de brevet FR-A-2 583 761 au nom de la Demanderesse.

Selon ce procédé, on peut obtenir une dispersion colloïdale en phase organique à partir d'une dispersion colloïdale en phase aqueuse obtenue selon l'un des modes précédents après précipitation de l'oxyde de titane sur les colloïdes d'oxyde de cérium en mettant en contact la dispersion colloïdale aqueuse avec une phase organique comprenant un acide organique et un milieu liquide organique ou solvant et en séparant la phase aqueuse et la phase organique.

Le milieu liquide organique et l'acide organique présentent les caratéristiques définies plus haut.

Par ailleurs, l'invention concerne aussi un procédé pour le revêtement de substrats notamment pour le revêtement anti-reflet, anti-UV et anti-salissure. Ce procédé consiste essentiellement à déposer sur lesdits substrats une dispersion colloïdale du type qui vient d'être décrit ci-dessus ou du type obtenu par les procédés mentionnés plus haut.

L'oxyde de titane par sa fonction photocatalytique apporte des propriétés anti-salissures au revêtement en utilisant les dispersions selon l'invention.

L'invention s'applique tout particulièrement au traitement de substrats métalliques ou en verre utilisés dans l'industrie automobile ou dans le bâtiment. L'état du substrat avant traitement ne nécessite pas d'intervention particulière, si ce n'est les traitements classiques de nettoyage et de dégraissage.

Ce dépôt de la dispersion peut être réalisé directement à partir de la dispersion colloïdale de l'invention en utilisant des techniques classiques de revêtement du type trempage, pulvérisation, évaporation sous vide ou sol-gel par exemple.

Le dépôt peut être effectué de préférence sur le substrat chaud.

Le substrat est ensuite traité thermiquement afin d'éliminer les différentes espèces présentes comme l'eau ou les composés organiques.

On forme ainsi après disparition de la phase liquide un substrat revêtu de manière discontinue et homogène de particules composées d'un coeur en oxyde de cérium au moins en partie recouvert d'oxyde de titane.

Enfin l'invention concerne une composition cosmétique comprenant une dispersion colloïdale du type décrit ci-dessus présentant notamment des propriétés anti-UV.

Des exemples vont maintenant être donnés.

### EXEMPLE 1

1)Préparation du sol de cérium
   On prépare un sol de cérium IV selon le procédé décrit dans la demande de brevet français FR-A-2 583 736 en partant d'une solution aqueuse de nitrate cérique obtenue par le procédé d'oxydation électrolytique d'une solution de nitrate céreux et décrit dans le brevet FR-A-2 570 087. Cette solution de nitrate cérique est mise en contact avec de l'ammoniaque de manière à obtenir une dispersion colloïdale de Ce IV qui est ensuite précipitée par un traitement thermique. Le précipité est filtré et redispersé dans de l'eau distillée.
   Le sol obtenu présente les caractéristiques suivantes :
   . concentration en colloïdes : 50 g/l
   . taille moyenne des colloïdes : 5 nm
   . pH = 1

   Ce sol d'oxyde de cérium est maintenu sous agitation à température ambiante.
2) Préparation du sel de titane
   On prépare un nitrate de titane de concentration 100 g/l.
3)Préparation de la dispersion colloïdale.
   On verse lentement et à froid 200ml de la solution de nitrate de titane dans 0,5l du sol de cérium. On attend 5 mn de manière à obtenir une homogénéité des espèces solubles de titane dans le sol de cérium.
   Puis on élève trés lentement la température à une vitesse de l'ordre de 1°C/mn jusqu'à atteindre la température de 60°C. Cette température est maintenue pendant une heure afin d'obtenir un rendement de précipitation de l'oxyde de titane de 95%.
   La dispersion colloïdale est ramenée à température ambiante.
   Le pH est de 0,5.
   Par diffusion quasi-élastique de la lumière, on observe que la taille moyenne des colloïdes d'oxyde de cérium sur lesquels a précipité l'oxyde de titane est de 12 nm.

### EXEMPLE 2

1)Préparation du sol de cérium
   On réalise un sol de cérium selon le procédé décrit à l'exemple 1.
2)Précipitation du sol de cérium
   Le sol de cérium obtenu est précipité par l'ajout d'une quantité suffisante d'ammoniaque.
   On obtient un gâteau d'oxyde de cérium de pH = 5,5.
3) Préparation de la dispersion colloïdale
   Le précipité d'oxyde de cérium est redispersé dans une solution de 0,51 de nitrate de titane identique à celle utilisée dans l'exemple 1, et peptise sous forme de sol.
   Puis on élève trés lentement la température du sol obtenu à une vitesse de l'ordre de 1°C/mn jusqu'à atteindre la température de 60°C. Cette température est maintenue pendant une heure pour obtenir un rendement de précipitation de l'oxyde de titane de 95%.
   La dispersion colloïdale est ramenée à température ambiante.
   Le pH est de 2.
   Par diffusion quasi-élastique de la lumière, on mesure que la taille moyenne des colloïdes d'oxyde de cérium sur lesquels a précipité l'oxyde de titane est de 12nm.

## Revendications

1. Dispersion colloïdale caractérisée en ce qu'elle comprend des colloïdes composés d'un coeur en oxyde de cérium au moins en partie recouvert d'une couche d'oxyde de titane.

2. Dispersion colloïdale selon la revendication 1 caractérisée en ce que les colloïdes ont une taille comprise entre 5 et 100 nm, de préférence entre 5 et 30 nm.

3. Dispersion colloïdale selon l'une des revendications précédentes caractérisée en ce que le rapport pondéral de l'oxyde de cérium sur l'oxyde de titane dans les colloïdes est compris entre 30/70 et 70/30.

4. Dispersion colloïdale selon l'une des revendications précédentes caractérisée en ce que la proportion de solide en suspension dans la dispersion est comprise entre 5 et 50% en poids, de préférence entre 5 et 20%.

5. Dispersion colloïdale selon l'une des revendications précédentes caractérisée en ce qu'elle comprend une phase liquide qui est une phase aqueuse.

6. Dispersion colloïdale selon l'une des revendications précédentes caractérisée en ce que la phase aqueuse comprend des nitrates, des acétates, des proponiates, des chlorures ou des ions ammoniums.

7. Dispersion colloïdale selon les revendications 1 à 4 caractérisée en ce qu'elle comprend une phase liquide qui est une phase organique.

8. Dispersion colloïdale selon l'une des revendications précédentes caractérisée en ce qu'elle comprend en outre au moins un métal choisi dans le groupe constitué par : le palladium, le tungstène, le platine, le rhodium.

9. Dispersion colloïdale selon la revendication 8 caractérisée en ce que la concentration en métaux est comprise entre 0,001 et 0,1% en poids.

10. Dispersion colloïdale selon les revendications 1 à 6 et 8 à 9 caractérisée en ce qu'elle présente un pH compris entre 0,5 et 4.

11. Dispersion colloïdale selon les revendications 1 à 6 et 8 à 9 caractérisée en ce qu'elle présente un pH compris entre 7 et 9.

12. Procédé de préparation de dispersions colloïdales selon les revendications 1 à 6 et 8 à 11 caractérisé en ce qu'il comprend une étape dans laquelle on met en présence un sol d'oxyde de cérium et un sel de titane puis une étape suivante dans laquelle on élève la température du milieu obtenu à l'étape précédente, éventuellement en présence d'urée, ce par quoi on obtient la précipitation de l'oxyde de titane sur les colloïdes d'oxyde de cérium.

13. Procédé de préparation de dispersions colloïdales selon les revendications 1 à 6 et 8 à 11 caractérisé en ce qu'il comprend une étape dans laquelle on met en présence un sol d'oxyde de cérium et un sel de titane puis une étape suivante dans laquelle on ajoute une base au milieu obtenu à l'étape précédente ce par quoi on obtient la précipitation de l'oxyde de titane sur les colloïdes d'oxyde de cérium.

14. Procédé de préparation de dispersions colloïdales selon les revendications 1 à 6 et 8 à 11 caractérisé en ce qu'il comprend les étapes suivantes :
- on précipite un sol d'oxyde de cérium par une base,
- on mélange le précipité obtenu avec un sel de titane ce par quoi on obtient un sol d'oxyde de cérium,
- on élève la température du sol formé, ce par quoi on obtient la précipitation de l'oxyde de titane sur les colloïdes d'oxyde de cérium.

15. Procédé de préparation de dispersions colloïdales selon les revendications 1 à 6 et 8 à 11 caractérisé en ce qu'il comprend les étapes suivantes :
- on précipite un sol d'oxyde de cérium par une base,
- on mélange le précipité obtenu avec un sel de titane ce par quoi on obtient un sol d'oxyde de cérium,
- on ajoute une base au sol formé, ce par quoi on obtient la précipitation de l'oxyde de titane sur les colloïdes d'oxyde de cérium.

16. Procédé selon les revendications 12 à 15 caractérisé en ce qu'on utilise comme sel de titane un nitrate, un chlorure ou un sulfate.

17. Procédé selon les revendications 12 et 14 caractérisé en ce qu'on élève la température à une valeur comprise entre 60 et 100°C.

18. Procédé selon l'une des revendications 12 à 17 caractérisé en ce qu'on ajoute au moins un métal choisi dans le groupe comprenant le palladium, le tungstène, le rhodium, le platine
soit au sol d'oxyde de cérium de départ,
soit au milieu formé lors de l'étape de mise en présence du sol d'oxyde de cérium et du sel de titane,
soit au précipité obtenu aprés précipitation du sol de cérium,
soit au mélange dudit précipité et du sel de titane,
soit à la dispersion colloïdale obtenue après la précipitation de l'oxyde de titane sur les colloïdes d'oxyde de cérium.

19. Procédé selon la revendication précédente caractérisé en ce qu'on ajoute les métaux sous forme de sels, plus particulièrement sous forme de nitrates ou de chlorures.

20. Procédé selon les revendications 12 à 19 caractérisé en ce qu'il comprend une étape supplémentaire dans laquelle on fait floculer la dispersion colloïdale obtenue après la précipitation de l'oxyde de titane sur les colloïdes d'oxyde de cérium, on lave le floculat et on le disperse dans une phase aqueuse de pH désiré.

21. Procédé de préparation de dispersions colloïdales selon la revendication 7 caractérisé en ce qu'il comprend les étapes des procédés selon les revendications 12 à 20 et une autre étape dans laquelle on met en contact la dispersion colloïdale en phase aqueuse obtenue après précipitation de l'oxyde de titane sur les colloïdes d'oxyde de cérium avec une phase organique comprenant un acide organique et un milieu liquide organique ou solvant et on sépare la phase aqueuse et la phase organique.

22. Procédé pour le revêtement d'un substrat caractérisé en ce qu'on dépose sur ledit substrat une dispersion colloïdale selon les revendications 1 à 11.

23. Procédé selon la revendication 22 caractérisé en ce qu'on dépose la dispersion par trempage ou par pulvérisation.

24. Composition cosmétique caractérisée en ce qu'elle comprend une dispersion colloïdale selon l'une des revendications 1 à 11.

## Claims

1. A colloidal dispersion, characterized in that it comprises colloids composed of a core of cerium oxide at least partially covered with a titanic oxide layer.

2. A colloidal dispersion according to claim 1, characterized in that the size of the colloids is in the range 5 to 100 nm, preferably in the range 5 to 30 nm.

3. A colloidal dispersion according to any one of the preceding claims, characterized in that the ratio of the cerium oxide to the titanium oxide in the colloids is in the range 30/70 to 70/30 by weight.

4. A colloidal dispersion according to any one of the preceding claims, characterized in that the proportion of solid in suspension in the dispersion is in the range 5% to 50% by weight, preferably in the range 5% to 20% by weight.

5. A colloidal dispersion according to any one of the preceding claims, characterized in that it comprises a liquid phase which is an aqueous phase.

6. A colloidal dispersion according to any one of the preceding claims, characterized in that the aqueous phase comprises nitrates, acetates, propionates, chlorides or ammonium ions.

7. A colloidal dispersion according to claims 1 to 4, characterized in that it comprises a liquid phase which is an organic phase.

8. A colloidal dispersion according to any one of the preceding claims, characterized in that it further comprises a metal selected from the group formed by: palladium, tungsten, platinum and rhodium.

9. A colloidal dispersion according to claim 8, characterized in that the metal concentration is in the range 0.001% to 0.1% by weight.

10. A colloidal dispersion according to claims 1 to 6 , 8 and 9, characterized in that it has a pH in the range 0.5 to 4.

11. A colloidal dispersion according to claims 1 to 6, 8 and 9, characterized in that it has a pH in the range 7 to 9.

12. A process for preparing colloidal dispersions according to claims 1 to 6 and 8 to 11, characterized in that it comprises a step in which a cerium oxide sol and a titanium salt are brought into contact, then a subsequent step in which the temperature of the medium obtained in the preceding step is raised, optionally in the presence of urea, to cause the titanium oxide to precipitate onto the cerium oxide colloids.

13. A process for preparing colloidal dispersions according to claims 1 to 6 and 8 to 11, characterized in that it comprises a step in which a cerium oxide sol and a titanium salt are brought into contact then a subsequent step in which a base is added to the medium obtained in the preceding step, to cause the titanium oxide to precipitate onto the cerium oxide colloids.

14. A process for preparing colloidal dispersions according to claims 1 to 6 and 8 to 11, characterized in that it comprises the following steps:
• precipitating a cerium oxide sol using a base;
• mixing the precipitate obtained with a titanium salt to produce a cerium oxide sol;
• raising the temperature of the sol which is produced to precipitate titanium oxide onto the cerium oxide colloids.

15. A process for preparing colloidal dispersions according to claims 1 to 6 and 8 to 11, characterized in that it comprises the following steps:
• precipitating a cerium oxide sol using a base;
• mixing the precipitate obtained with a titanium salt to produce a cerium oxide sol;
• adding a base to the sol which is produced to precipitate titanium oxide onto the cerium oxide colloids.

16. A process according to claims 12 to 15, characterized in that the titanium salt is a nitrate, chloride or sulphate.

17. A process according to claims 12 to 14, characterized in that the temperature is raised to a value in the range 60°C to 100°C.

18. A process according to any one of claims 12 to 17, characterized in that at least one metal selected from the group formed by palladium, tungsten, rhodium and platinum is added:
either to the starting cerium oxide sol;
or to the medium formed when bringing the cerium oxide sol into contact with a titanium salt;
or to the precipitate obtained after precipitating the cerium sol;
or to the mixture of said precipitate and the titanium salt;
or to the colloidal dispersion obtained after precipitating the titanium oxide onto the cerium oxide colloids.

19. A process according to the preceding claim, characterized in that the metals are added in the form of salts, more particularly in the form of nitrates or chlorides.

20. A process according to claims 12 to 19, characterized in that it comprises a supplemental step in which the colloidal dispersion obtained is flocculated after precipitating the titanium oxide onto the cerium oxide colloids, the flocculate is washed and dispersed in an aqueous phase of the desired pH.

21. A process for preparing colloidal dispersions according to claim 7, characterized in that it comprises the process steps of claims 12 to 20 and a further step in which the colloidal dispersion is brought into contact, in the aqueous phase obtained after precipitating the titanium oxide onto the cerium oxide colloids, with an organic phase comprising an organic acid and an organic liquid medium or solvent and the aqueous phase is separated from the organic phase.

22. A process for coating a substrate, characterized in that a colloidal dispersion according to claims 1 to 11 is deposited on said substrate.

23. A process according to claim 22, characterized in that the dispersion is deposited by immersing or by spraying.

24. A cosmetic composition, characterized in that it comprises a colloidal dispersion according to any one of claims 1 to 11.

## Patentansprüche

1. Kolloidale Dispersion, dadurch gekennzeichnet, daß sie Kolloide umfaßt, die aus einem Kern von Ceroxid, der mindestens teilweise von einer Schicht aus Titanoxid bedeckt ist, zusammengesetzt sind.

2. Kolloidale Dispersion nach Anspruch 1, dadurch gekennzeichnet, daß die Kolloide eine Größe zwischen 5 nm und 100 nm, vorzugsweise zwischen 5 nm und 30 nm besitzen.

3. Kolloidale Dispersion nach einem der vorstehenden Ansprüche, dadurch gekennzeichnet, daß das Gewichtsverhältnis von Ceroxid zu Titanoxid in den Kolloiden zwischen 30/70 und 70/30 beträgt.

4. Kolloidale Dispersion nach einem der vorstehenden Ansprüche, dadurch gekennzeichnet, daß das Verhältnis von suspendiertem Feststoff in der Dispersion zwischen 5 Gew.-% und 60 Gew.-%, vorzugsweise zwischen 5 Gew.-% und 20 Gew.-% beträgt.

5. Kolloidale Dispersion nach einem der vorstehenden Ansprüche, dadurch gekennzeichnet, daß sie eine flüssige Phase umfaßt, die eine wäßrige Phase ist.

6. Kolloidale Dispersion nach einem der vorstehenden Ansprüche, dadurch gekennzeichnet, daß die wäßrige Phase Nitrate, Acetate, Propionate, Chloride oder Ammoniumionen umfaßt.

7. Kolloidale Dispersion nach Anspruch 1 bis 4, dadurch gekennzeichnet, daß sie eine flüssige Phase umfaßt, die eine organische Phase ist.

8. Kolloidale Dispersion nach einem der vorstehenden Ansprüche, dadurch gekennzeichnet, daß sie außerdem mindestens ein Metall umfaßt, gewählt aus der Gruppe, die gebildet wird durch: Palladium, Wolfram, Platin, Rhodium.

9. Kolloidale Dispersion nach Anspruch 8, dadurch gekennzeichnet, daß die Konzentration an Metallen zwischen 0,001 Gew.-% und 0,1 Gew.-% beträgt.

10. Kolloidale Dispersion nach Anspruch 1 bis 6 und 8 bis 9, dadurch gekennzeichnet, daß sie einen pH-Wert zwischen 0,5 und 4 aufweist.

11. Kolloidale Dispersion nach Anspruch 1 bis 6 und 8 bis 9, dadurch gekennzeichnet, daß sie einen pH-Wert zwischen 7 und 9 aufweist.

12. Verfahren zur Herstellung von kolloidalen Dispersionen nach Anspruch 1 bis 6 und 8 bis 11, dadurch gekennzeichnet, daß es eine Stufe umfaßt, bei der man ein Sol von Ceroxid und ein Salz von Titan zusammenbringt, und anschließend eine Stufe, bei der man die Temperatur des in der vorangegangenen Stufe erhaltenen Milieus erhöht, gegebenenfalls in Anwesenheit von Harnstoff, wodurch man die Ausfällung des Titanoxides auf den Kolloiden von Ceroxid erhält.

13. Verfahren zur Herstellung von kolloidalen Dispersionen nach Anspruch 1 bis 6 und 8 bis 11, dadurch gekennzeichnet, daß es eine Stufe umfaßt, bei der man ein Sol von Ceroxid und ein Salz von Titan zusammenbringt, und anschließend eine Stufe, bei der man eine Base zu dem in der vorangegangenen Stufe erhaltenen Milieu gibt, wodurch man die Ausfällung des Titanoxides auf den Kolloiden von Ceroxid erhält.

14. Verfahren zur Herstellung von kolloidalen Dispersionen nach Anspruch 1 bis 6 und 8 bis 11, dadurch gekennzeichnet, daß es die folgenden Stufen umfaßt:
- man fällt ein Sol von Ceroxid durch eine Base,
- man mischt den erhaltenen Niederschlag mit einem Salz von Titan, wodurch man ein Sol von Ceroxid erhält,
- man erhöht die Temperatur des gebildeten Sols, wodurch man die Ausfällung des Titanoxides auf den Kolloiden von Ceroxid erhält.

15. Verfahren zur Herstellung von kolloidalen Dispersionen nach Anspruch 1 bis 6 und 8 bis 11, dadurch gekennzeichnet, daß es die folgenden Stufen umfaßt:
- man fällt ein Sol von Ceroxid durch eine Base,
- man mischt den erhaltenen Niederschlag mit einem Salz von Titan, wodurch man ein Sol von Ceroxid erhält,
- man gibt eine Base zu dem gebildeten Sol, wodurch man die Ausfällung des Titanoxides auf den Kolloiden von Ceroxid erhält.

16. Verfahren nach Anspruch 12 bis 15, dadurch gekennzeichnet, daß man als Titansalz ein Nitrat, ein Chlorid oder ein Sulfat verwendet.

17. Verfahren nach Anspruch 12 und 14, dadurch gekennzeichnet, daß man die Temperatur auf einen Wert zwischen 60 °C und 100 °C erhöht.

18. Verfahren nach einem der Ansprüche 12 bis 17, dadurch gekennzeichnet, daß man mindestens ein Metall, gewählt aus der Palladium, Wolfram, Rhodium und Platin umfassenden Gruppe, gibt
- entweder zu dem eingesetzten Sol von Ceroxid,
- oder zu dem Milieu, das bei der Stufe des Zusammenbringens des Sols von Ceroxid und des Salzes von Titan gebildet wird,
- oder zu dem Niederschlag, der nach der Ausfällung des Sols von Cer erhalten wird,
- oder zu der Mischung des genannten Niederschlages und des Salzes von Titan,
- oder zu der kolloidalen Dispersion, die nach dem Ausfällen des Titanoxides auf den Kolloiden von Ceroxid erhalten wird.

19. Verfahren nach dem vorstehenden Anspruch, dadurch gekennzeichnet, daß man die Metalle in Form von Salzen, ganz besonders in Form von Nitraten oder Chloriden, zusetzt.

20. Verfahren nach Anspruch 12 bis 19, dadurch gekennzeichnet, daß es eine zusätzliche Stufe umfaßt, bei der man die nach dem Ausfällen des Titanoxides auf den Kolloiden von Ceroxid erhaltene kolloidale Dispersion ausflockt, das Flockungsprodukt wäscht und es in einer wäßrigen Phase vom gewünschten pH-Wert dispergiert.

21. Verfahren zur Herstellung von kolloidalen Dispersionen nach Anspruch 7, dadurch gekennzeichnet, daß es die Stufen des Verfahrens nach Anspruch 12 bis 20 umfaßt und eine weitere Stufe, bei der man die nach dem Ausfällen des Titanoxides auf den Kolloiden von Ceroxid in wäßriger Phase erhaltene kolloidale Dispersion mit einer organischen Phase in Kontakt bringt, die eine organische Säure und ein flüssiges organisches Milieu oder Lösungsmittel umfaßt, und man die wäßrige Phase und die organische Phase trennt.

22. Verfahren zum Überziehen eines Substrates, dadurch gekennzeichnet, daß man eine kolloidale Dispersion nach Anspruch 1 bis 11 auf das genannte Substrat aufbringt.

23. Verfahren nach Anspruch 22, dadurch gekennzeichnet, daß man die Dispersion durch Tauchen oder durch Versprühen aufbringt.

24. Kosmetische Zusammensetzung, dadurch gekennzeichnet, daß sie eine kolloidale Dispersion nach einem der Ansprüche 1 bis 11 umfaßt.
